# EUROPEAN PATENT APPLICATION

(11) **EP 4 748 472 A1**
(43) Date of publication of application: **27.05.2026**
(21) Application number: 25213901.9
(22) Date of filing: 06.11.2025
(51) Int. Cl.: B01D 53/00, B01D 53/62, F01K 25/00, F25J 3/06, B01D 53/26

(54) **CARBON DIOXIDE SEPARATION AND CAPTURE SYSTEM INCLUDING EJECTOR**

(30) Priority: 08.11.2024 KR 20240158295
(71) Applicant: Institute for Advanced Engineering, Yongin-si, Gyeonggi-do 17180 (KR)
(72) Inventor: PARK, Junseok, 17047 Yongin-si, Gyeonggi-do (KR); PARK, Sungho, 17149 Yongin-si, Gyeonggi-do (KR); CHUNG, Sohmyung, 17161 Yongin-si, Gyeonggi-do (KR); CHOI, Kwangsoon, 07226 Seoul (KR); LEE, Changhyeong, 46055 Busan (KR); YOON, Sanghee, 35248 Daejeon (KR); LIM, Jongwoong, 17053 Yongin-si, Gyeonggi-do (KR)
(74) Representative: BCKIP Part mbB

(57) **Abstract**

The present disclosure relates to a carbon dioxide separation and capture system including an ejector. The carbon dioxide separation and capture system including an ejector according to an embodiment of the present disclosure comprises : a first heat exchanger for cooling exhaust gas containing carbon dioxide by heat exchange with a refrigerant; a second heat exchanger for reheating exhaust gas from which carbon dioxide has been removed; and an ejector to which the reheated exhaust gas and the refrigerant heated and vaporized by the first heat exchanger are supplied; and the ejector is configured to inhale the reheated exhaust gas into a low-pressure region formed as the vaporized refrigerant passes therethrough, and to lower pressure of the reheated exhaust gas by mixing it with the vaporized refrigerant and discharging it.

## Description

### CROSS-REFERENCE TO RELATED PATENT APPLICATION

This application claims the benefit of Korean Patent Application No. 10-2024-0158295, filed on Nov. 08, 2024, in the Korean Intellectual Property Office.

### TECHNICAL FIELD

The present disclosure relates to a carbon dioxide separation and capture system including an ejector.

### BACKGROUND

With the gradual acceleration of global warming, problems, such as abnormal temperatures and the sea level rise are occurring worldwide. The main cause of such a worsening global warming is the increase in greenhouse gas emissions, and as carbon dioxide emissions account for the largest proportion of all greenhouse gases, the need to reduce carbon dioxide emissions is increasing.

However, since current efficiency of industrial energy use is at its highest level, excessive reduction in carbon dioxide emissions could lead to weakening industrial competitiveness. Therefore, along with efforts to reduce carbon dioxide emissions and direct reduction through Carbon Capture, Utilization, and Storage (CCUS), (hereinafter referred to as "carbon dioxide capture, storage, and utilization technology") are required as a technical alternative.

The carbon dioxide capture, storage, and utilization technology encompasses technologies for capturing carbon dioxide generated from industrial facilities and storing the captured carbon dioxide underground as well as technologies for conversion into a highly value added useful resource material with using carbon dioxide.

Among them, carbon dioxide capture technology is broadly divided into a post-combustion technology, a pre-combustion technology, and an oxy-fuel combustion technology.

In particular, the post-combustion technology is related to a method of separating carbon dioxide from exhaust gases emitted when burning fossil fuels with air, the pre-combustion technology is to separate carbon dioxide in a process of producing hydrogen from fossil fuel, and is a method of converting synthetic gas generated after gasifying fossil fuels into carbon dioxide and hydrogen through an aqueous gas transfer reaction, and then separating only carbon dioxide, and the oxy-fuel combustion technology is a method of generating and separating only carbon dioxide after combustion by separating oxygen in the air, instead of air to combust fossil fuels.

Among them, the post-combustion technology is classified into a wet absorption method using an amine-based wet absorbent, a dry absorption method using a solid absorbent, a membrane separation method using a separation membrane, and a phase separation method using phase change.

However, the wet absorption method has a problem in that a large amount of compression work is required to liquefy carbon dioxide separated from a wet absorbent after separating carbon dioxide from the wet absorbent and high energy is required to regenerate the wet absorbent to its initial state. The dry absorption method also has a problem in that a large amount of compression work is required to liquefy carbon dioxide separated from a solid absorbent after separating carbon dioxide from the solid absorbent and a high energy is required to regenerate the solid absorbent to its initial state. In addition, the membrane separation method has a disadvantage that it is difficult to increase the capacity and durability is weak due to deterioration of the separation membrane. Moreover, the phase separation method has a disadvantage that, since pressure higher than that of the triple point is needed to separate carbon dioxide from the exhaust gas into a liquid, it shows low energy efficiency.

In particular, the conventional carbon dioxide capture processes using phase separation employ a method of compressing and cooling a fluid, such as exhaust gas, from which carbon dioxide is to be captured, and then lowering its temperature through an expansion process using a JT valve, expander, or isentropic nozzle, so as to precipitate the carbon dioxide into a solid. In such conventional carbon dioxide capture technologies using phase separation, exhaust gas is cooled using the cold heat of a cooler or refrigerator, but the thermal energy loss in the cooling process is considerable.

In addition, the conventional carbon dioxide capture processes using phase separation employ a method of increasing pressure of an upstream process to increase an expansion ratio or lowering pressure of a downstream process using a vacuum pump. However, the method has a disadvantage of increasing capital expenditure (CAPEX) due to introduction of high-performance compressor or vacuum pumps and increasing operational expenditure (OPEX) due to electrical energy consumption and maintenance.

### SUMMARY

### TECHNICAL PROBLEM

Embodiments of the present disclosure have been devised to address the conventional problems above, and are directed to providing a carbon dioxide separation and capture system capable of significantly improving energy efficiency in a phase separation process for separating and capturing carbon dioxide from exhaust gas compared to the related art.

In addition, the present disclosure is directed to providing a carbon dioxide separation and capture system that secures a desired expansion ratio without components such as expensive vacuum pumps or high-performance compressor, thereby reducing both capital expenditure (CAPEX) and operational expenditure (OPEX).

In addition, the present disclosure is directed to providing a carbon dioxide separation and capture system in which a greater temperature reduction is realized by reducing pressure at a rear end of a nozzle to increase an expansion ratio within the nozzle, thereby increasing a carbon dioxide capture rate.

### TECHNICAL SOLUTION

According to one aspect of the present disclosure, a carbon dioxide separation and capture system including an ejector may be provided, the system includes: a first heat exchanger that cools exhaust gas including carbon dioxide by exchanging heat with a refrigerant; a second heat exchanger that reheats the exhaust gas from which carbon dioxide has been removed; and an ejector to which the reheated exhaust gas and the refrigerant that is heated and vaporized by the first heat exchanger are supplied, wherein the ejector is configured to inhale the reheated exhaust gas into a low-pressure region formed as the vaporized refrigerant passes through the inside thereof, mix it with the vaporized refrigerant, and then discharge it so that pressure of the reheated exhaust gas is decreased.

In addition, a carbon dioxide separation and capture system including an ejector may be provided, wherein the ejector includes a working fluid inlet through which the vaporized refrigerant is introduced; a low-pressure part connected to a rear end of the working fluid inlet and having a diameter smaller than that of the working fluid inlet; an exhaust gas inlet connected to the low-pressure part and into which the reheated exhaust gas is introduced; and a mixing outlet connected to the low-pressure part and through which the vaporized refrigerant and the reheated exhaust gas are mixed and discharged.

In addition, a carbon dioxide separation and capture system including an ejector may be provided, wherein as the vaporized refrigerant introduced through the working fluid inlet passes through the low-pressure part, a flow rate of the vaporized refrigerant is increased and a pressure thereof is decreased, thereby forming a low-pressure region inside the low-pressure part, the reheated exhaust gas is inhaled into the low-pressure part by a pressure difference of the reheated exhaust gas introduced into the low-pressure region and the exhaust gas inlet, and the reheated exhaust gas inhaled into the low-pressure part is mixed with the vaporized refrigerant and then discharged to the mixing outlet.

In addition, a carbon dioxide separation and capture system including an ejector may be provided, wherein the system further includes a compressor for pressurizing exhaust gas discharged from the first heat exchanger to a predetermined pressure; and a cooler for cooling the exhaust gas compressed while passing through the compressor to a predetermined temperature.

In addition, a carbon dioxide separation and capture system including an ejector may be provided, wherein the system further includes an expansion means connected to the second heat exchanger and in which the exhaust gas cooled by the cooler is introduced in a further cooled state via the second heat exchanger and expanded; and a capturing means connected to the expansion means and in which carbon dioxide from the exhaust gas that has passed through the expansion means is separated and captured.

In addition, a carbon dioxide separation and capture system including an ejector may be provided, wherein the expansion means is composed of any one of a Joule-Thompson nozzle, an expander, and an isentropic nozzle.

In addition, a carbon dioxide separation and capture system including an ejector may be provided, wherein carbon dioxide in the exhaust gas which has passed through the expansion means is phase-separated into a solid form and separated into solid carbon dioxide and remaining gas in the capturing means.

In addition, a carbon dioxide separation and capture system including an ejector may be provided, wherein the system further includes an expander connected to the ejector and in which gas mixed with the vaporized refrigerant discharged from the ejector and the reheated exhaust gas is expanded; and a recompressor connected to the expander and in which exhaust gas compressed by the compressor is recompressed, wherein recompression of the exhaust gas is performed in the recompressor by pressure generated as the mixed gas expands in the expander.

In addition, a carbon dioxide separation and capture system including an ejector may be provided, wherein the system further includes a generator connected to the ejector and in which electric power is generated by expanding gas mixed with the vaporized refrigerant discharged from the ejector and the reheated exhaust gas.

### ADVANTAGEOUS EFFECTS

According to embodiments of the present disclosure, there is an effect that energy efficiency in a phase separation process for separating and capturing carbon dioxide from exhaust gas can be significantly improved compared to the related art.

In addition, there is an effect that a desired expansion ratio can be secured without components such as expensive vacuum pumps or high-performance compressor, thereby reducing both capital expenditure (CAPEX) and operational expenditure (OPEX).

In addition, there is an effect that a greater temperature reduction is realized by reducing pressure at a rear end of a nozzle to increase an expansion ratio within the nozzle, thereby increasing a carbon dioxide capture rate.

### BRIEF DESCRIPTION OF THE DRAWINGS

FIG. 1 is a process diagram illustrating a carbon dioxide separation and capture system including an ejector according to one embodiment of the present disclosure.
FIG. 2 is an enlarged cross-sectional view illustrating an internal structure of the ejector in FIG. 1.
FIG. 3 is a process diagram illustrating a carbon dioxide separation and capture system including an ejector according to another embodiment of the present disclosure.
FIG. 4 is a process diagram illustrating a carbon dioxide separation and capture system including an ejector according to yet another embodiment of the present disclosure.

### DETAILED DESCRIPTION OF THE EMBODIMENTS

Hereinafter, specific embodiments for implementing the spirit of the present disclosure will be described in detail with reference to the drawings.

In addition, in descriptions of the present disclosure, when it is determined that detailed descriptions of related well-known configurations and functions might obscure the gist of the present disclosure, detailed descriptions thereof will be omitted.

In addition, it will be understood that when a component is referred to as being "coupled" or "connected" to another component, it can be directly coupled or connected to the other component or intervening components may be present.

The terminology used herein is for the purpose of describing particular embodiments only and is not intended to be limiting of the present disclosure. Singular expressions include plural expressions unless the context clearly indicates otherwise.

In addition, expressions "one side," "the other side," "upper side," "lower side," etc. in this specification are explained based on the drawings and may be expressed differently when the direction of the object changes. For the same reason, some components in the attached drawings are exaggerated, omitted, or schematically depicted, and the size of each component does not entirely reflect the actual size.

In addition, terms that include ordinal numbers, such as "first," "second," etc., may be used to describe various components, but these components are not limited by such terms. These terms are only used to distinguish one component from another.

The term "comprising" as used in the specification means specifying a particular characteristic, region, integer, step, operation, element and/or component, but does not exclude the presence or addition of other particular characteristics, regions, integers, steps, operations, elements, components and/or groups.

Hereinafter, a specific configuration of a carbon dioxide separation and capture system including an ejector according to one embodiment of the present disclosure will be described with reference to the drawings.

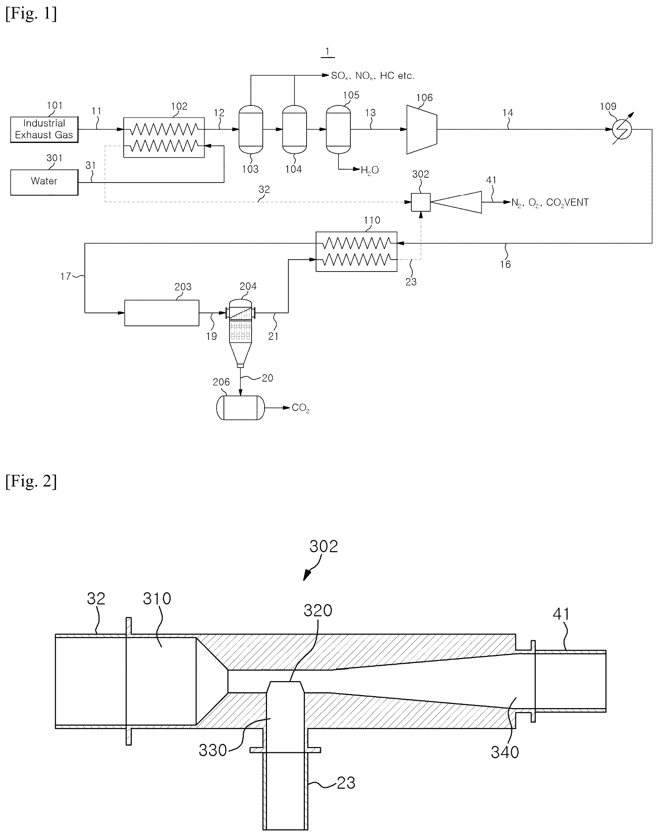

Referring to FIG. 1, a carbon dioxide separation and capture system 1 including an ejector according to one embodiment of the present disclosure may greatly improve energy efficiency while reducing costs and increasing capture efficiency by efficiently utilizing the heat energy of exhaust gas discharged from a gas emission source 101 by applying an ejector 302. The carbon dioxide separation and capture system 1 may include a first heat exchanger 102, a desulfurizer 103, a catalytic converter 104, a water condenser 105, a compressor 106, a cooler 109, a second heat exchanger 110, an expansion means 203, a capturing means 204, a storage tank 206, a refrigerant supply source 301, and an ejector 302.

The first heat exchanger 102 may receive exhaust gas from the gas emission source 101 and cool it. For example, the exhaust gas may be flue gas composed of nitrogen, oxygen, carbon dioxide, and water vapor. However, this is merely an example for convenience of description, and the composition of the exhaust gas may vary with various compositions containing at least carbon dioxide. The first heat exchanger 102 may be connected to the gas emission source 101 through an exhaust gas supply line 11 and may receive exhaust gas containing carbon dioxide through the gas emission source 101 and primarily cool it by heat-exchanging it with a refrigerant to be described later. In other words, the first heat exchanger 102 may remove sensible heat of the exhaust gas discharged from the gas emission source 101 to lower a temperature of the exhaust gas.

In this case, cooling heat for cooling the exhaust gas may be cooling heat of the refrigerant supplied from the refrigerant supply source 301 described later. Here, the refrigerant supplied from the refrigerant supply source 301 may be, for example, cooling water or process water, but the spirit of the present disclosure is not limited thereto. However, for the convenience of description, the following description will be given as an example of a case where the refrigerant is cooling water at room temperature.

The first heat exchanger 102 may cool the exhaust gas by exchanging heat between the refrigerant supplied from the refrigerant supply source 301 and the exhaust gas discharged from the gas emission source 101, and then supply primary cooled exhaust gas to the desulfurizer 103 through a primary cooled exhaust gas supply line 12.

The primary cooled exhaust gas supplied to the desulfurizer 103 is pretreated by sequentially passing through the desulfurizer 103, the catalytic converter 104, and the water condenser 105, and then may be supplied to the compressor 106 through a pretreated exhaust gas supply line 13. In this embodiment, a case where the exhaust gas passes through in the order of the desulfurizer 103, the catalytic converter 104, and the water condenser 105 for pretreatment was described as an example, but the spirit of the present disclosure is not limited thereto, and the order in which it passes through the pretreatment process may be changed.

The compressor 106 may pressurize the exhaust gas discharged from the first heat exchanger 102 to a predetermined pressure. In this case, the exhaust gas discharged from the first heat exchanger 102 may be supplied to the compressor 106 after being pretreated by sequentially passing through the aforementioned desulfurizer 103, the catalytic converter 104, and the water condenser 105.

The compressor 106 may pressurize the pretreated exhaust gas to a predetermined pressure. The exhaust gas compressed in the compressor 106 may be supplied to the cooler 109 through the compressed exhaust gas supply line 14.

The cooler 109 may cool the compressed exhaust gas to a predetermined temperature while passing through the compressor 106. In this case, the compressed exhaust gas by the cooler 109 may be secondarily cooled, thereby removing moisture contained in the exhaust gas. The exhaust gas secondarily cooled by the cooler 109 may be supplied to the second heat exchanger 110 through a secondary cooled exhaust gas supply line 16.

The second heat exchanger 110 may reheat the exhaust gas from which carbon dioxide has been removed. To this end, the second heat exchanger 110 may be connected to a rear end of the cooler 109 to perform a function of tertiarily cooling the secondary cooled exhaust gas discharged from the cooler 109. In other words, the second heat exchanger 110 may remove sensible heat of the secondary cooled exhaust gas discharged from the cooler 109 to further lower a temperature of the secondary cooled exhaust gas.

In this case, cooling heat for the tertiary cooling of the exhaust gas may be cooling heat of gas discharged from the capturing means 204 described later. Here, the gas discharged from the capturing means 204 may be remaining exhaust gas after solid carbon dioxide has been separated from the exhaust gas that has been tertiarily cooled in the second heat exchanger 110. In other words, the second heat exchanger 110 may further cool the exhaust gas by heat-exchanging between the exhaust gas from which carbon dioxide discharged from the capturing means 204 has been removed and the exhaust gas that has been secondarily cooled in the cooler 109. The exhaust gas that has been tertiarily cooled in this way may be supplied to the expansion means 203 through a tertiary cooled exhaust gas supply line 17.

The expansion means 203 is connected to the second heat exchanger 110 and is provided so that the exhaust gas cooled by the cooler 109 is introduced in a further cooled state through the second heat exchanger 110 and expanded. The expansion means 203 may be composed of any one of a Joule-Thomson nozzle, an expander, and an isentropic nozzle.

The tertiary cooled exhaust gas supplied to the expansion means 203 may be adiabatically expanded while passing through the expansion means 203, thereby further lowering the temperature of the exhaust gas. In this process, carbon dioxide existing in a gaseous state within the exhaust gas is phase separated into a solid form. As such, the exhaust gas in which carbon dioxide is phase separated by adiabatic expansion may be supplied to the capturing means 204 through an expanded exhaust gas supply line 19.

The capturing means 204 is connected to the expansion means 203 and is provided to separate and capture carbon dioxide in the exhaust gas that has passed through the expansion means 203. In this case, the carbon dioxide in the exhaust gas that has passed through the expansion means 203 may be phase-separated into the solid form and may be separated into solid carbon dioxide and the remaining gas in the capturing means 204. The solid carbon dioxide separated in this way may be transported to and stored in the storage tank 206 through a captured carbon dioxide supply line 20. In this case, when transporting the solid carbon dioxide to the storage tank 206, for example, it may be transported by using gravity to the storage tank 206 that is disposed lower than the capturing means 204.

The remaining exhaust gas left after the solid carbon dioxide is separated from the capturing means 204 may be supplied to the second heat exchanger 110 through the exhaust gas supply line 21 from which carbon dioxide has been removed, and may be heat-exchanged with the secondary cooled exhaust gas supplied from the cooler 109 in the second heat exchanger 110 to transfer cooling heat of the exhaust gas from which carbon dioxide has been removed. In other words, the exhaust gas from which carbon dioxide introduced to the second heat exchanger 110 has been removed is reheated by the secondary cooled exhaust gas and its temperature is increased, and then may be supplied to the ejector 302 through a reheated exhaust gas supply line 23.

Meanwhile, the refrigerant may be supplied from the refrigerant supply source 301 to the first heat exchanger 102 through the refrigerant supply line 31 and may transfer the cooling heat while exchanging heat with the exhaust gas discharged from the gas emission source 101. In other words, the refrigerant supplied to the first heat exchanger 102 is heated by the exhaust gas discharged from the gas emission source 101, its temperature is increased and then it is vaporized, and may be supplied to an ejector 302 through a steam supply line 32.

The ejector 302 is supplied with the reheated exhaust gas and the vaporized refrigerant heated by the first heat exchanger 102. The ejector 302 is configured to inhale the reheated exhaust gas into a low-pressure region formed as the vaporized refrigerant passes through the inside thereof, mix it with the vaporized refrigerant, and discharge it through a steam-exhaust gas mixing line 41 so that a pressure of the reheated exhaust gas is lowered.

In other words, the ejector 302 may use high-temperature and high-pressure steam (vaporized refrigerant) generated by using the heat energy of the exhaust gas in the first heat exchanger 102 as a driving fluid. In addition, the ejector 302 has an effect of further lowering pressure at a rear end of the expansion means 203 by connecting to the rear end of the expansion means 203 and an exhaust gas inlet 330.

The operating principle of the ejector 302 is as follows: As a high-temperature and high-pressure driving fluid passes through the inside of the ejector 302, a local low-pressure region is formed according to Bernoulli's principle, and low-pressure reheated exhaust gas is inhaled, mixed, and discharged. Through this, pressure at the rear end is decreased, thereby increasing an expansion ratio and maximizing an effect of decreasing the temperature of the exhaust gas. Through the ejector 302, pressure of the gas discharged from the carbon dioxide separation and capture system 1 may be decreased without a separate vacuum pump, thereby improving energy efficiency of the process and reducing costs.

Specifically, referring to FIG. 2, the ejector 302 may include a working fluid inlet 310, a low-pressure part 320, the exhaust gas inlet 330, and a mixing outlet 340. All of the working fluid inlet 310, the low-pressure part 320, the exhaust gas inlet 330, and the mixing outlet 340 may be connected to one passage.

The working fluid inlet 310 is provided to allow the vaporized refrigerant to be introduced and may be connected to an end portion of the steam supply line 32. In this case, the vaporized refrigerant acting as a working fluid may be high-temperature and high-pressure steam.

The low-pressure part 320 is connected to a rear end of the working fluid inlet 310 and may have a diameter smaller than that of the working fluid inlet 310. Accordingly, as the working fluid introduced through the working fluid inlet 310 passes through the low-pressure part 320, a flow rate increases, and thus pressure decreases, thereby forming a low-pressure region within the low-pressure part 320.

The exhaust gas inlet 330 is connected to the low-pressure part 320 and is provided to allow the reheated exhaust gas to be introduced, and may be connected to an end portion of the reheated exhaust gas supply line 23. In this case, the reheated exhaust gas may be inhaled into the low-pressure region by a force generated by a pressure difference with the low-pressure region formed by a pressure drop of the working fluid in the low-pressure part 320.

The mixing outlet 340 is connected to the low-pressure part 320, and the vaporized refrigerant and the reheated exhaust gas are mixed and discharged. The mixing outlet 340 may include a trapezoidal cylindrical flow path of which diameter increases in a direction away from the low-pressure part 320, and as mixed gas of steam and exhaust gas passes through such a flow path, pressure is decreased and the mixed gas is discharged to the outside through the steam-exhaust gas mixing line 41.

In other words, as the vaporized refrigerant introduced through the working fluid inlet 310 passes through the low-pressure part 320, a flow rate is increased and pressure is decreased, thereby forming a low-pressure region inside the low-pressure part 320, the reheated exhaust gas is inhaled into the low-pressure part 320 by a pressure difference of the reheated exhaust gas introduced into the low-pressure region and the exhaust gas inlet 330, and the reheated exhaust gas inhaled into the low-pressure part 320 is mixed with the vaporized refrigerant and then discharged to the mixing outlet 340.

According to the embodiments of the present disclosure described above, there is an effect that energy efficiency in a phase separation process for separating and capturing carbon dioxide from exhaust gas may be significantly improved compared to the related art. In addition, there is an effect that a desired expansion ratio can be secured without components such as expensive vacuum pumps or high-performance compressor, thereby reducing both capital expenditure (CAPEX) and operational expenditure (OPEX). Furthermore, there is an effect that a greater temperature reduction is realized by reducing pressure at a rear end of a nozzle to increase an expansion ratio within the nozzle, thereby increasing a carbon dioxide capture rate.

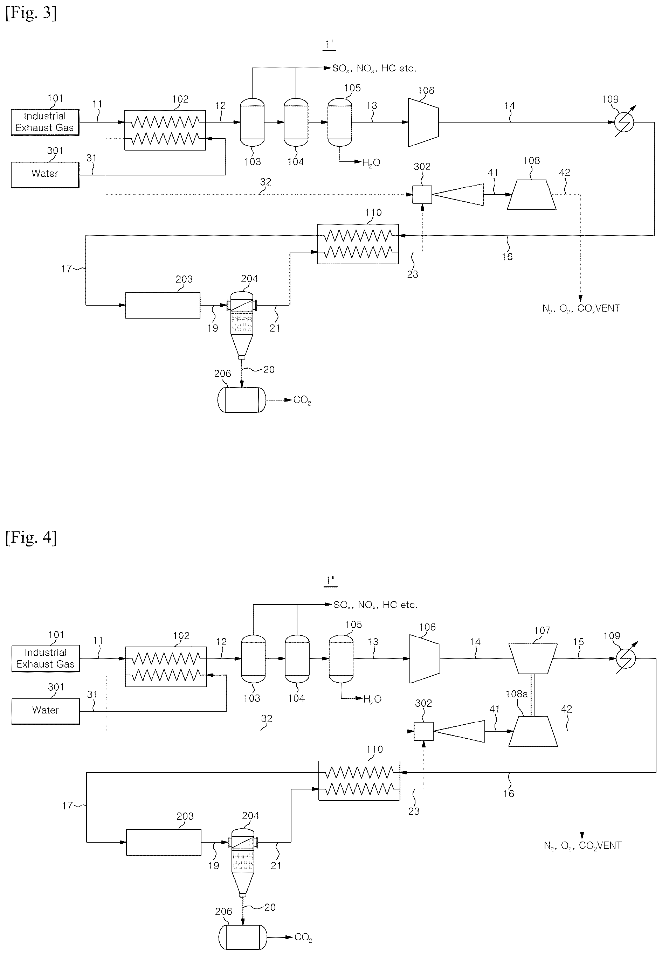

Hereinafter, another embodiment of the present disclosure will be described with reference to FIG. 3. Since a carbon dioxide separation and capture system 1' according to the present embodiment differs in that it additionally includes a generator 108 compared with the above-described embodiment, the description will focus on the difference, and the above-described embodiment will be used for the other same points.

The carbon dioxide separation and capture system 1' according to the present embodiment further includes the generator 108 that is connected to the ejector 302 and generates electric power by expanding a gas mixed with the vaporized refrigerant and the reheated exhaust gas discharged from the ejector 302. The generator 108 may be connected to the steam-exhaust gas mixing line 41 connected to the rear end of the ejector 302 and may generate electric power by receiving a mixed gas of steam and exhaust gas discharged from the ejector 302. For example, the generator 108 may be a gas turbine power generation device. The generated electric power may be used as internal electric power required to operate the entire system, or may be transferred to the outside and utilized externally. The mixed gas that has been utilized for electric power generation through the generator 108 may be discharged to the outside through an atmospheric discharge line 42.

According to the present embodiment, the gas discharged from the ejector 302 is utilized to generate electric power in the generator 108, and thus there is an effect of increasing energy utilization efficiency of the entire system.

Meanwhile, another embodiment of the present disclosure will be described with reference to FIG. 4. Since a carbon dioxide separation and capture system 1" according to the present embodiment differs in that it additionally includes a recompressor 107 and an expander 108a compared with the above-described embodiment, the description will focus on the difference, and the above-described embodiment will be used for the other same points.

The carbon dioxide separation and capture system 1" according to the present embodiment may further include the expander 108a that is connected to the ejector 302 and expands a gas mixed with the vaporized refrigerant and the reheated exhaust gas discharged from the ejector 302 and a recompressor 107 that is connected to the expander 108a and recompresses the exhaust gas compressed by the compressor 106.

The recompressor 107 may recompress the exhaust gas that has been primarily compressed in the compressor 106 to higher pressure using high-pressure gas that has passed through the ejector 302, thereby improving the carbon dioxide capture rate by inducing a temperature drop in the exhaust gas before capture by improving a compression ratio through this. In addition, even when maintaining the same compression ratio, the energy required for compression in the compressor 106 may be saved, thereby improving energy efficiency. In this case, the recompressor 107 may be provided as, for example, a compander. The exhaust gas that has been secondarily compressed in the recompressor 107 may be transferred to the cooler 109 through a recompressed exhaust gas supply line 15.

The expander 108a may be connected to the steam-exhaust gas mixing line 41 of the rear end of the ejector 302, and the exhaust gas may be recompressed in the recompressor 107 by pressure generated in a process of receiving and expanding the mixed gas of steam and exhaust gas discharged from the ejector 302. The mixed gas that has been utilized for exhaust gas recompression may be discharged to the outside through the atmospheric discharge line 42.

Although the embodiments of the present disclosure have been described as specific embodiments, these are merely examples, and the present disclosure is not limited thereto, but should be construed as having the broadest scope in accordance with the basic idea disclosed in this specification. Those skilled in the art may implement patterns of shapes not specified by combining/substituting the disclosed embodiments, but this also does not depart from the scope of the present disclosure. In addition, those skilled in the art may easily modify or alter the disclosed embodiments based on this specification, and it is clear that such modifications or alterations also fall within the scope of the present disclosure.

## Claims

1. A carbon dioxide separation and capture system including an ejector, the system comprising:
a first heat exchanger that cools exhaust gas including carbon dioxide by heat exchange with a refrigerant;
a second heat exchanger that reheats the exhaust gas from which carbon dioxide has been removed; and
an ejector to which the reheated exhaust gas and the refrigerant that is heated and vaporized by the first heat exchanger are supplied,
wherein the ejector is configured to inhale the reheated exhaust gas into a low-pressure region formed as the vaporized refrigerant passes through the inside thereof, mix it with the vaporized refrigerant, and then discharge it so that pressure of the reheated exhaust gas is decreased.

2. The system according to claim 1,
wherein the ejector includes:
a working fluid inlet through which the vaporized refrigerant is introduced;
a low-pressure part connected to a rear end of the working fluid inlet and having a diameter smaller than that of the working fluid inlet;
an exhaust gas inlet connected to the low-pressure part and into which the reheated exhaust gas is introduced; and
a mixing outlet connected to the low-pressure part and through which the vaporized refrigerant and the reheated exhaust gas are mixed and discharged.

3. The system according to claim 2,
wherein a flow rate of the vaporized refrigerant is increased and pressure thereof is decreased as the vaporized refrigerant introduced through the working fluid inlet passes through the low-pressure part, thereby forming a low-pressure region inside the low-pressure part,
the reheated exhaust gas is inhaled into the low-pressure part by a pressure difference of the reheated exhaust gas introduced into the low-pressure region and the exhaust gas inlet, and
the reheated exhaust gas inhaled into the low-pressure part is mixed with the vaporized refrigerant and then discharged to the mixing outlet.

4. The system according to claim 1, further comprising:
a compressor for pressurizing exhaust gas discharged from the first heat exchanger to a predetermined pressure; and
a cooler for cooling the exhaust gas compressed while passing through the compressor to a predetermined temperature.

5. The system according to claim 4, further comprising:
an expansion means connected to the second heat exchanger and in which the exhaust gas cooled by the cooler is introduced in a further cooled state via the second heat exchanger and expanded; and
a capturing means connected to the expansion means and in which carbon dioxide from the exhaust gas that has passed through the expansion means is separated and captured.

6. The system according to claim 5,
wherein the expansion means is formed of any one of a Joule-Thompson nozzle, an expander, and an isentropic nozzle.

7. The carbon dioxide separation and capture system according to claim 5,
wherein carbon dioxide in the exhaust gas which has passed through the expansion means is phase-separated into a solid form and separated into solid carbon dioxide and remaining gas in the capturing means.

8. The carbon dioxide separation and capture system according to claim 4, further comprising:
an expander connected to the ejector and in which gas mixed with the vaporized refrigerant discharged from the ejector and the reheated exhaust gas is expanded; and
a recompressor connected to the expander and in which exhaust gas compressed by the compressor is recompressed,
wherein recompression of the exhaust gas is performed in the recompressor by pressure generated as the mixed gas expands in the expander.

9. The carbon dioxide separation and capture system according to any one of claim 1 to claim 5, further comprising:
a generator connected to the ejector and in which electric power is generated by expanding gas mixed with the vaporized refrigerant discharged from the ejector and the reheated exhaust gas.
